# NEW EUROPEAN PATENT SPECIFICATION

(11) **EP 0 416 653 B2**
(45) Date of publication and mention of the opposition decision: **31.07.2002**
(45) Mention of the grant of the patent: 20.03.1996
(21) Application number: 90117303.9
(22) Date of filing: 07.09.1990
(51) Int. Cl.: F16J 15/32, B29C 70/00, B29C 45/40, B29D 31/00

(54) **Method and apparatus for forming a gasket on a surface of an article**
Verfahren und Vorrichtung zur Herstellung einer Dichtung auf einer Fläche eines Gegenstands
Procédé et dispositif pour la fabrication d'un joint sur une surface d'un objet

(30) Priority: 08.09.1989 US 404933
(43) Date of publication of application: 13.03.1991
(73) Proprietor: NORTON COMPANY, Worcester, MA 01615-0008 (US)
(72) Inventor: Comert, Ahmet, B-4655 Chaineux (BE); Petit, Dominique, B-4512 Housse-Belegny (BE)
(74) Representative: Zimmermann, Gerd Heinrich

(56) References cited:
- EP-A- 0 281 228
- DE-B- 1 182 424
- GB-A- 2 215 659
- US-A- 3 169 025
- PATENT ABSTRACTS OF JAPAN vol. 7, no. 95 (M-209)(1240), 21 April 1983; & JP-A-5818216 (HASHIMOTO FORMING KOGYO K.K.) 02.02.1983

## Description

One off the universal elements found in the design and manufacture of products is the gasket or seal. Many industries, such as those in automotive, appliance end packaging activities, use large amounts of gaskets for water sealing, dust sealing, air sealing, and the like. In many cases, the gaskets are in the form of custom-designed molded pieces or are supplied in roll form. In the latter situation, the user cuts a length from the roll and places it manually in the desired location in his product. In both cases (molded piece and roll form), there is a manual operation that is not only expensive, but does not fit into an automatic assembly line. In present-day manufacturing, in order to attain efficiency and to maintain a competitive position, it is necessary to have automation and low labor costs.

In order to overcome the above objections, the concept of forming a gasket "in place" has been developed i.e., making the gasket on the surface of the product with which it is to be used. This procedure is very promising and constitutes a growing sector in those industries that use gaskets. As a matter of fact, the installation of gasket forming "in place" has been proposed by several companies, particularly those manufacturing and selling robotic systems.

In general, the automatic forming of a gasket on the surface of a product requires the use of several techniques, namely robotics, material handling, and material compounding. Such an installation would typically consist of an automatic gun fed by a metering pump system operating through a mixing device for evenly mixing a two-component material, such as used for generating polyurethane. The gun is driven by a robot arm along an appropriate path while extruding the required amount of material. In such installations, the heaviest investment is in the robot, which is usually a 2 or 3 axis portic type. The handling equipment usually consists of two metering pumps, each handling one of the two reactive components of the material to be used for the gasket. These metering pumps supply appropriate amounts of each component and introduce them to a static or dynamic mixing device.

In the past, the material used has generally been a two-part flexible polyurethane, which can be foamed or unfoamed. If the material is foamed, this is usually accomplished by the use of CO₂ generated by the reaction of one of the components with moisture contained in the other component. Low viscosity components are usually used, since it is easier to mix them.

The low viscosity components of such a system are very appropriate in the case of a flat gasket. i e. a gasket applied to a single plane surface and where the cross-sectional shape can be a substantially semi-oval shape. Because of their low viscosity, such materials will not hold other shapes (rectangular or triangular for instance) and, because they are liquid, a tridimensional (x y, z) application is not possible, in such a case, the material will flow and will not hold a uniform shape. A gasket of this type is known from JP-A-60237267. A bead of liquid rubber polymer is applied to a sealing surface of the object on which the gasket is to be formed. Then a top mold having a groove at its underside is placed on the top of the bead and the liquid rubber polymer and the rubber is hardened while the top mold is upon same by applying a means such as heating.

While certain high-viscosity materials do not have this deficiency, they have other problems. For instance if a bead of high viscosity material is laid by extrusion onto a surface in the shape of a closed figure, the cross-sectional shape may be indeterminate at the point where the "ends" of the extrusion come together. The ends will either be somewhat separated and leave a section of reduced cross-sectional area or they will overlap and produce a section of greater than desired cross-sectional area. Either of these situations is unacceptable where a gasket of absolutely uniform shape and cross-sectional area is desired,

It can be seen, then, that a low viscosity gasket material is limited to single plane surfaces where the cross-sectional shape is unimportant, while high-viscosity materials give problems at the "start and stop" location. These and other difficulties experienced with the prior art systems have been obviated in a novel manner by the present invention.

In EP-A 326704 a semi-interpenetrating polymer system is disclosed containing a first and a second material which when exposed to moisture becomes thermoset.

It is therefore, an outstanding object of the invention to provide a gasket and a method for forming a gasket in place on a surface that lies in other than a single plane as well as an apparatus for making same. This object is solved by the method of independent claims 1 and 4. Further advantageous features of the invention are evident from the dependent claims, the description and the drawings. The claims are intended to be a first nonlimiting approach of defining the invention in general terms. The invention provides a process for the "in place" application of a gasket material with a desired cross-sectional shape that is other than a natural liquid bead.

Further the present invention provides a method for forming a gasket of highly viscous material in a closed figure and with a uniform cross-sectional shape even at the "start and stop" position.

It is another aspect of the present invention to provide a method for forming an annular gasket "in place" with a uniform cross-sectional shape through the entire length.

A still further aspect ol the invention is the provision of gasket which is formed in place and which has a uniform cross-sectional form and area throughout.

It is a further aspect of the invention to provide apparatus for forming an annular gasket in place with a uniform cross-sectional shape in its entire length.

In general, the invention has to do with a gasket formed in place on a surface off an article by producing an initial bead of a viscous material the bead having a selected cross-sectional form and area A mold having an elongated cavity, having the same cross-sectional area as the initial bead, is brought into contact with the surface to produce the final shape of the gasket on the surface.

More specifically, the initial bead can be produced (a) by extruding it onto the surface or (b) by extruding it into the elongated cavity.
Figure 1 is a perspective view of a joint using a gasket made in accordance with the principles of the present invention,
Figure 2 is a sectional view of tho joint taken on the line II-II of Figure 1,
Figure 3 is a perspective view of an article forming part of the joint and showing the gasket of the invention in operative position,
Figure 4 is a sectional view of apparatus for forming the gasket by a first method,
Figure 5 is a sectional view of apparatus for forming the gasket by a second method,
Figure 6 is a flow chart showing the steps of forming the gasket by the first method,
Figure 7 is a flow chart showing the steps of forming the gasket by the second method.

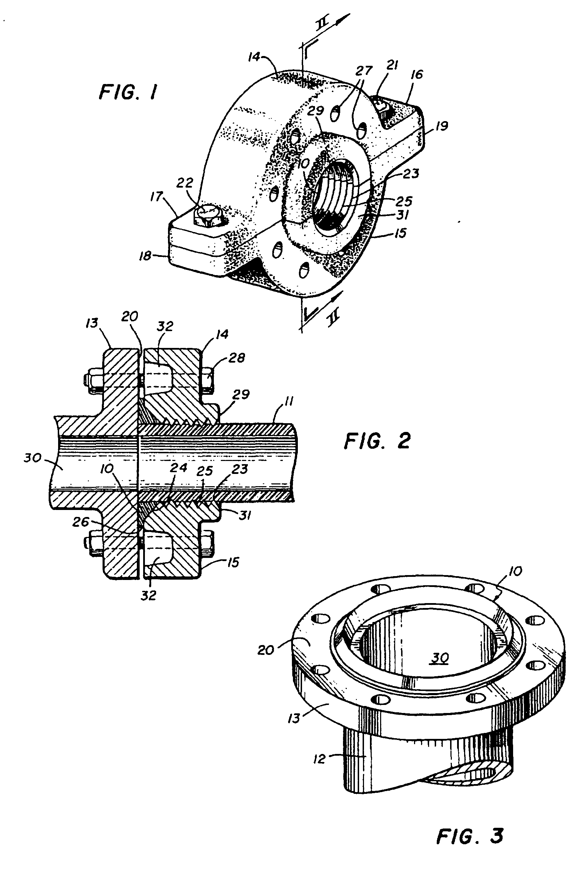

Referring first to Figures 1 and 2, wherein are best shown the general features of the invention, the gasket, indicated generally by the reference numeral 10, is shown in use as a seal in a joint, such as an adapter flange for pipes.

The flange consists of two similar bodies 14 and 15. The upper body 14 is provided with arms 16 and 17, while the lower body 15 is provided with similar arms 18 and 19. The two bodies have together a disk-like configuration and have an axial bore 23 whose surface is provided with peripheral serrations 25. The bodies are provided with bolt holes 27 spaced on a standard centerline circle. The main bodies 14 and 15 are provided with axially-extending arcuate protuberances 29 and 31, respectively, which define a hub extending from one side of the assembly. Bolts 21 and 22 hold the bodies 14 and 15 together.

Figure 2 shows the manner in which the bodies 14 and 15 are provided with pockets 32 located between the bolt holes 27. The adapter flange is shown in use in attaching a plastic pipe 11 to a flange 13 of an article 12, which article may be another pipe, a valve, or the like.

In order to complete the assembly, the adapter flange is first mounted on the pipe 11 and is then bolted to the flange 13 When the bolts 21 and 22 are drawn up completely, the seal or gasket 10 on the flange 13 fits into a conical counterbore 24 formed on the bodies 14 and 15 the bolts 29 fit in the bolt holes 27 and draw the adapter flange against the face or surface 20 of the flange 13 thus squeezing the gasket 10 between them to provide a water-tight seal.

The gasket 10 is formed of an elastomer and is formed "in place" on the face or surface 20 of the flange 13 of the article 12. The nature of the elastomer, as well as the apparatus and method for forming the gasket in place, are the subject of the present invention. As is evident in Figures 2 and 3, the gasket 10 has a generally triangular cross-section with a slight rib or flange 26 extending radially from one base. In other words, the gasket has an intricate form which makes it particularly appropriate for illustrating the principles of the present invention.

Figure 3 shows the gasket 10 after it has been formed "in place" on the surface 20 of the flange 13 on the article 12. For the purpose of illustrating the invention, the article is shown as having a bore 30, while the gasket 10 is shown as a closed figure and as an annulus. For the purposes of this description, an annulus is defined to mean the solid body whose surface is generated by a closed plane figure that is moved in a path about a central line, while maintaining a constant orientation to that line; under this definition, the cross-sectional shape can be any plane figure (not just a circle, as in the case of a toroid), the movement can take place along any closed figure, including a circle or a rectangle with rounded corners, and the generating figure can also move up or down relative to the central line (not just remaining in a single plane perpendicular to the line).

The gasket 10 is formed of a moisture curable semi-IPN (interpenetrating polymer network) described in patent application Serial Number 140.851 (corresponding to EP-A 326704), filed on January 5, 1988 and entitled "MOISTURE CURABLE HOT MELT ELASTOMERS". which description is incorporated by reference into the present case. As described in that patent application, it has been found that novel and useful types of materials (especially useful for not melt type sealants) can be made by blending at least two components (a) a generally non-reactive thermoplastic synthetic polymer with at least moderate flexibility, i.e. a non-crosslinkable elastomer such as styrene-isoprene-styrene block copolymer, styrene-butadiene-styrene block copolymer, polyisobutylene. styrene-ethylene-butylene-styrene block copolymer, ethylene-propylene rubber, and plasticized poly (vinyl chloride) (hereinafter PVC) and (b) a polymer or oligomer having end groups capable of further reaction with one another under the influence of atmospheric moisture, e g 10-100% relative humidity for at least 5 minutes, such as polyesters or polyethers or polybutadienes terminated with isocyonate or trialkoxysilyl end groups. The materials can be extruded or othervise molded into the desired shape in which they are to be finally used, while being protected from exposure to moisture or other active hydrogen-containing compounds. The shaped article of the materials is then allowed to undergo further reaction under the influence of liquid water or ambient moisture producing what is believed in the preferred embodiments to be an essentially thermoset IPN structure with excellent resistance to environmental degradation. The blend of materials may be stored in a covered drum or a sealable plastic bag in a single large mass, or in pellet form for later processing into the desired final product, here again the blend of materials must be protected from moisture during storage.

Optional components of the materials according to this invention include plasticizers, accelerators for the cross linking reaction, surfactants, and fillers.

More specifically, the gasket 10 is formed from a mixture, comprising (a) a first component which is a primary polymer having a polyester backbone and isocyanate end groups that are capable of chemically reacting with each other in the presence of moisture to form a derivative polymer having a longer average chain length than said primary polymer and (b) a second component which is a non-crosslinked elastomer that is not substantially chemically reactive with itself or with said first component in the presence of moisture, wherein said first and said second components are intimately mixed to form said composition of matter. The composition, when maintained in the absence of moisture and other active hydrogen donor materials, is a readily extrudable and otherwise conventionally moldable thermoplastic composition, but which, upon exposure to moisture, becomes essentially thermoset. The said second component is selected from the group consisting of styrene-isoprene-styrene block polymers, styrene-butadiene-styrene block polymers, isoprene homopolymers, and polyvinyl chloride, polyisobutylene, styrene-ethylene-butylene-styrene, and ethylene-propylene rubber. When the compositions are exposed to moisture it, becomes essentially thermoset. The amount of unextractable material exceeds the original amount of the uncured (but curable) prepolymer in said composition, when the essentially thermoset material is extracted by refluxing the material for one hour in a solvent that would have dissolved all of said first and second components prior to exposure of the composition to said moisture.

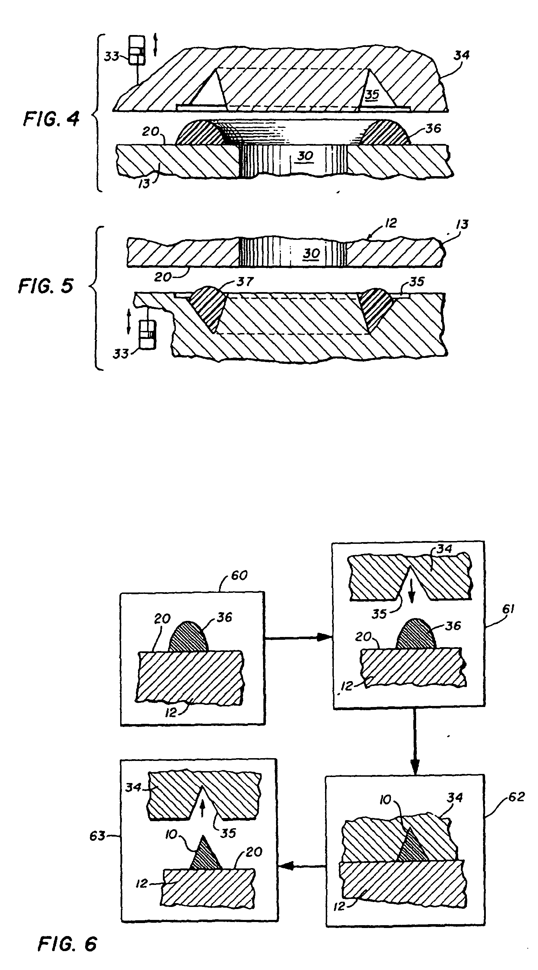

Figure 4 shows an apparatus for forming the gasket 10 on the surface 20 of an article, such as the flange 13 of the article 12. An elongated initial bead 36 is placed on the surface 20 by extrusion. A mold 34 is moved downwardly by a robot, cylinder 33 or the like. Eventually, an elongated cavity 35 in the mold, comes in contact with the bead 36 and causes it to conform to the shape of the cavity. The cross-sectional shape of the cavity is selected to be the same as the desired cross-sectional shape of the finished gasket 10. Generally speaking, the area of the cross-section of the cavity is the same as the area of the cross-section of the initial bead, except that the bead may contain a little more material in the center portion than the cavity, so that flow may take place lengthwise to fill any deficiency at the "start and stop" location of the extended bead. Ideally, when longitudinal flow has taken place completely, the volume of material in the final bead or gasket should be the same as the volume of the elongated cavity 35 and there should be no sign of the place where the ends of the initial bead came together when the mold is then removed by the cylinder 33.

Figure 5 is a schematic view showing apparatus for performing another method of applying the gasket 10 to the surface 20 of an article, such as the flange 13 of the article 12. The initial bead 37 is placed by extrusion in the elongated cavity 35 of the mold 34. The mold is then pressed into contact with the surface 20 by the cylinder 33 and is later moved away, leaving the formed gasket on the surface. A release coating of the well-known type is applied to the surface of the cavity to facilitate removal from the gasket which adheres to the surface 20. It can be seen, then, that the initial bead 37 has substantially the same cross-sectional area as the cavity 35, so that, when the redistribution takes place, the cavity is completely filled and there are neither empty spaces or overfill.

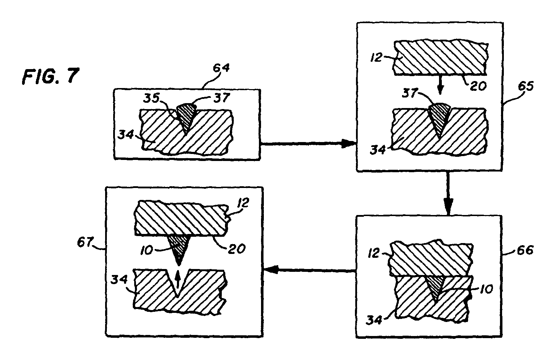

Figures 6 and 7 are flow charts that show the various method steps carried out by the apparatus shown in Figures 4 and 5 respectively. Since these illustrations are schematic, no attempt has been made to show the cavity in the intricate shape used in the other figures of drawings.

Figure 6, which illustrates the steps carried out in the operation of the apparatus shown in Figure 4, starts off with Step 60 which consists of extruding the initial bead 36 onto the surface 20 of the article 12. The next step is Step 61 in which the mold 34a which has the elongated cavity 35, is moved toward the surface 20 of the article 12 and toward the initial bead 36 of gasket material. The cross-sectional area of the initial bead 36 is substantially the same as the cross-sectional area of the cavity 35, as has been explained above; this is true only if the finished gasket is to be of uniform cross-sectional shape and size throughout. If the gasket if to vary from place to place, suitable compensation must take place in the cavity 35, so that the cross-sectional areas of the cavity and bead are the same from point-to-point.

Step 62 now takes place and consists of bringing the mold into contact with the article 12 thus completing the formation of the finished gasket 10. In Step 63, the mold 34 is moved away from the article 12, thus separating the cavity 35 from the finished gasket 10. The gasket remains in the surface 20 of the article and is subsequently cured, if necessary. During Step 62 the initial bead 36 is not only plastically deformed in the lateral directions to conform to the cross-sectional shape of the cavity 35 but the material may also flow longitudinally of the cavity to remedy any deficiencies in cross-sectional shape or size, particularly at the "start-and-stop" position.

Figure 7 shows the method steps used in operating the apparatus of Figure 5. To begin with, in Step 64 the initial bead 37 is deposited by extrusion in the elongated cavity 35. The bead at this point may not adapt completely to the shape of the cavity, because of the high viscosity of the material. In Step 65, the article 12 with its surface 20 is moved toward the mold 34 and the initial bead 37. Step 66 consists of completing the movement of the article toward the mold, so that the surface 20 presses the initial bead 37 and causes the material to flow into all parts of the cavity 35, the flow taking place both laterally and longitudinally, as may be necessary and as has been explained more fully above. Finally, in Step 67 the article 12 is lifted from the mold, carrying the finished gasket 10 with and attached to the surface 20 by adhesion. Suitable release agents, etc., can be used in the cavity 35 before the gasket material is introduced into it to facilitate separation of the gasket from the cavity.

It should be understood that the orientation of the elements described above is only for the purse of illustration and that all of the methods could be carried in any orientation if suitable adjustment be made in the gasket material, the cavity, the article surface, etc..

The advantages of the present invention will now be clearly understood in view of the above description. For instance, it is possible by the practice of the invention to assure that a gasket is accurately formed in place on an article, which gasket has a selected shape and size throughout its length. In many cases, where the gasket is in the shape of a closed figure, the cross-sectional shape and area will be the same throughout the entire length. Even when the initial bead is formed by applying an extrusion of the material onto the article surface, the "start-and-stop" location in the finished gasket will be formed without a discontinuity. Furthermore, by the practice of the invention, it is possible to form a gasket that lies along a surface that has more than a single plane configuration, while maintaining a consistent cross-sectional shape and area. In addition, in those cases where it is desired to provide a gasket whose shape or size varies from one location to another, it is possible to do so accurately and consistently by use of the invention apparatus and methods.

## Claims

1. Method of forming a gasket which lies in other than a single plane on a surface of an article, comprising the steps of:
(a) forming an elongated bead or gasket material being a moisture-curable semi-IPN (interpenetrating network) of a first and a second component on the surface of the article, which bead has selected cross-sectional areas throughout its length,
(b) contacting the said surface with a mold having an elongated mold cavity, which mold cavity has a cross-sectional area throughout its length that has substantially the same cross-sectional area as the bead at a given point of contact being such that the cross-sectional shape of the formed gasket is other than that of the bead, the cross-sectional shape of the mold cavity being other than substantially semi-oval,
(c) removing the mold, and then
(d) curing the gasket.

2. Method as recited in claim 1, wherein the said cross-sectional shape and area of the bead is the same throughout its length and the cross-sectional area of the elongated mold cavity is substantially the same as that of the bead.

3. Method as recited claim 1 or 2, wherein the bead and the elongated mold cavity have a line joining the centroids of cross-sections that is a closed figure.

4. Method of forming a gasket on a surface of an article, comprising the steps of:
(a) providing a mold cavity having a release coating applied to the surface of the cavity,
(b) forming an elongated bead of a gasket material being a moisture-curable semi-ipn(interpenetrating network) of a first and a second component, which bead has selected cross-sectional areas throughout its length, in the mold having an elongated mold cavity, which mold cavity has a cross- sectional area throughout its length that has substantially the same cross-sectional areas as the bead at a given point of contact
(c) contacting the said surface with the elongated bead in the mold,
(d) removing the mold, such that the gasket remains adhered to said surface of said article, and then
(e) curing the gasket.

5. Method as recited in claim 4, wherein the said cross-sectional shape and area of the bead is the same throughout its length and the cross-sectional area of the elongated mold cavity is substantially the same as that of the bead.

6. Method as recited in claim 4 , wherein the bead and the elongated mold cavity have a line joining the centroids of cross-sections that is a closed figure.

7. Method as recited in one of claims 4 to 6 , wherein the said cross-sectional shape and area of the bead is the same throughout its length and the cross-sectional area of the elongated mold cavity is substantially the same as that of the bead.

8. Method as recited in one of claims 4 to 7 wherein the bead and the elongated mold cavity have a fine joining the centroids of cross-sections that is a closed figure.

9. Method as recited in one of the preceding claims, wherein the gasket material is formed by combining a first and a second component at the time of formation of the bead, wherein the first component is a moisture curable polymer and the second component is a non-crosslinked elastomer, which, when exposed to moisture, becomes thermoset.

10. Method as recited in Claim 9, wherein:
(a) the first component is a primary polymer having a polyester backbone and isocyanate end groups that are capable of chemically reacting with each other in the presence of moisture to form a derivative polymer having a longer than average chain length than said primary polymer, and
(b) the second component is a non-crosslinked elastomer that is not substantially chemically reactive with itself or with said first component in the presence of moisture, wherein said first and said second components are intimately mixed to form said composition of matter; said composition of matter, when maintained in the absence of moisture and other active hydrogen donor materials, is a readily extrudable and otherwise conventionally moldable thermoplastic composition, but which, upon exposure to moisture, becomes essentially thermoset.

11. Method as recited in claims 8 to 10, wherein the said second component is selected from the group consisting of styrene-isoprene-styrene block polymers, styrene-butadiene-styrene block polymers, isoprene homopolymer, and polyvinyl chloride, polyisobutylene, styrene-ethylene- butylene-styrene, and ethylene-propylene rubber.

12. Method as recited in one of claims 8 to 11, wherein, when exposed to a relative humidity of 10 % to 100 % for at least 5 minutes, or when submerged in water at 0°C to 100°C, the material becomes an essentially thermoset elastomeric material.

13. Article comprising a gasket formed according to a method of one of claims 1 to 12.

## Patentansprüche

1. Verfahren zur Bildung einer in einer anderen als einer einzigen Ebene liegenden Dichtung auf einer Oberfläche eines Artikels mit den Schritten:
(a) Bilden eines länglichen Wulstes eines Dichtungsmaterials, welches ein feuchtigkeitshärtbares Semi-IPN (sich durchdringendes Netzwerk) aus einem ersten und einem zweiten Bestandteil ist, auf der Oberfläche des Artikels, wobei der Wulst ausgewählte Querschnittsflächen über dessen Länge hinweg aufweist,
(b) Inkontaktbringen der Oberfläche mit einer einen länglichen Formenhohlraum aufweisenden Form, wobei der Formenhohlraum über seine Länge hinweg eine Querschnittsfläche aufweist, welche an einem bestimmten Kontaktpunkt im wesentlichen die selbe Querschnittsfläche aufweist wie der Wulst, derart, daß die Querschnittsform der gebildeten Dichtung anders ist als die des Wulstes, wobei die Querschnittsform des Formenhohlraums anders ist als im wesentlichen halboval,
(c) Entfernen der Form, und dann
(d) Härten der Dichtung.

2. Verfahren nach Anspruch 1, wobei über die Länge die Querschnittsform und -fläche des Wulstes die gleiche ist und die Querschnittsfläche des länglichen Formenhohlraums im wesentlichen die gleiche ist wie die des Wulstes.

3. Verfahren nach Anspruch 1 oder 2, wobei der Wulst und der längliche Formenhohlraum eine geschlossene Figur darstellende Linie aufweisen, welche die Schwerpunkte der Querschnitte verbindet.

4. Verfahren zur Bildung einer Dichtung auf einer Oberfläche eines Artikels mit den Schritten:
(a) Zurverfügungstellen eines Formenhohlraums mit einer auf der Oberfläche des Hohlraums aufgebrachten Freigabebeschichtung,
(b) Bilden eines länglichen Wulstes eines Dichtungsmaterials, welches ein feuchtigkeitshärtbares Semi-IPN (sich durchdringendes Netzwerk) aus einem ersten und einem zweiten Bestandteil ist, wobei der Wulst ausgewählte Querschnittsflächen über dessen Länge hinweg aufweist, in der Form mit einem länglichen Formenhohlraum, wobei der Formenhohlraum eine Querschnittsfläche über seine Länge hinweg aufweist, welche an einem gegebenen Kontaktpunkt im wesentlichen die gleichen Querschnittsflächen aufweist wie der Wulst,
(c) Inkontaktbringen der Oberfläche mit dem länglichen Wulst in der Form,
(d) Entfernen der Form, so daß die Dichtung an der Oberfläche des Artikels haften bleibt, und dann
(e) Härten der Dichtung.

5. Verfahren nach Anspruch 4, wobei die Querschnittsform und -fläche des Wulstes über dessen Länge hinweg gleich ist und die Querschnittsfläche des länglichen Formenhohlraums im wesentlichen der gleiche ist wie die des Wulstes.

6. Verfahren nach Anspruch 4, wobei der Wulst und der längliche Formenhohlraum eine geschlossene Figur darstellende Linie aufweisen, welche die Schwerpunkte der Querschnitte verbindet.

7. Verfahren nach einem der Ansprüche 4 bis 6, wobei die Querschnittsform und -fläche des Wulstes über dessen Länge hinweg gleich ist und die Querschnittsfläche des länglichen Formenhohlraums im wesentlichen die gleiche ist wie die des Wulstes.

8. Verfahren nach einem der Ansprüche 4 bis 7, wobei der Wulst und der längliche Formenhohlraum eine geschlossene Figur darstellende Linie aufweisen, welche die Schwerpunkte der Querschnitte verbindet.

9. Verfahren nach einem der vorhergehenden Ansprüche, wobei das Dichtungsmaterial durch Kombinieren eines ersten und eines zweiten Bestandteils zum Zeitpunkt der Bildung des Wulstes hergestellt wird, wobei der erste Bestandteil ein feuchtigkeitshärtbares Polymer und der zweite Bestandteil ein nicht vernetzbares Elastomer ist, welches, wenn es Feuchtigkeit ausgesetzt wird, duroplastisch wird.

10. Verfahren nach Anspruch 9, wobei
(a) der erste Bestandteil ein primäres Polymer ist mit einem Polyestergrundgerüst und Isocyanatendgruppen, die in Gegenwart von Feuchtigkeit chemisch miteinander reagieren können, um ein Polymerderivat zu bilden, dessen durchschnittliche Kettenlänge länger ist als die des primären Polymers, und
(b) der zweite Bestandteil ein nicht vernetzbares Elastomer ist, das in Gegenwart von Feuchtigkeit im wesentlichen chemisch nicht mit sich selbst oder mit dem ersten Bestandteil reagiert, wobei der erste und der zweite Bestandteil innig gemischt werden, um die Stoffverbindung zu bilden; wobei die Stoffverbindung, wenn diese in Abwesenheit von Feuchtigkeit und anderen aktiven Wasserstoffdonormaterialien gehalten wird, eine leicht extrudierbare und ansonsten herkömmlich formbare, thermoplastische Zusammensetzung ist, welche aber, bei Aussetzen gegenüber Feuchtigkeit, im wesentlichen duroplastisch wird.

11. Verfahren nach einem der Ansprüche 8 bis 10, wobei der zweite Bestandteil ausgewählt ist aus der Gruppe bestehend aus Styrol-Isopren-Styrol-Blockpolymeren, Styro-Butadien-Styrol-Blockpolymeren, Isopren-Homopolymer und Polyvinylchlorid, Polyisobutylen, Styrol-Ethylen-Butylen-Styrol und Ethylen-Propylen-Kautschuk.

12. Verfahren nach einem der Ansprüche 8 bis 11, wobei das Material, wenn dieses mindestens 5 Minuten lang einer relativen Feuchtigkeit von 10 % bis 100 % ausgesetzt wird oder in Wasser bei 0°C bis 100°C untergetaucht wird, ein im wesentlichen duroplastisches Elastomermaterial wird.

13. Artikel, enthaltend eine Dichtung gebildet nach einem Verfahren eines der Ansprüche 1 bis 12.

## Revendications

1. Procédé de formation d'un joint qui ne s'étend pas dans un plan unique sur une surface d'un article, comprenant les étapes consistant à :
(a) former un cordon allongé d'un matériau pour joint, qui est un semi-RIP (réseau interpénétrant) durcissable sous l'effet de l'humidité, formé d'un premier et d'un second composants à la surface de l'article, lequel cordon a des surfaces en section transversale choisies sur toute sa longueur,
(b) mettre ladite surface en contact avec un moule ayant une cavité de moule allongée, laquelle cavité de moule a une surface en section transversale, sur toute sa longueur, qui est sensiblement identique à la surface en section transversale du cordon en un point de contact donné, tel que la forme en section transversale du joint formé est autre que celle du cordon, la forme en section transversale de la cavité de moule étant autre que sensiblement semi-ovale,
(c) retirer le moule, puis
(d) faire durcir le joint.

2. Procédé selon la revendication 1, dans lequel lesdites forme et surface en section transversale du cordon sont les mêmes sur toute sa longueur, et la surface en section transversale de la cavité de moule allongée est sensiblement la même que celle du cordon.

3. Procédé selon la revendication 1 ou 2, dans lequel le cordon et la cavité de moule allongée présentent une ligne qui relie les centroïdes des sections transversales et forme une figure fermée.

4. Procédé de formation d'un joint sur une surface d'un article, comprenant les étapes consistant à :
(a) fournir une cavité de moule ayant un revêtement anti-adhérent appliqué à la surface de la cavité ;
(b) former, dans le moule ayant une cavité allongée, un cordon allongé d'un matériau pour joint, qui est un semi-RIP (réseau interpénétrant)durcissable sous l'effet de l'humidité, formé d'un premier et d'un second composants, lequel cordon a des surfaces en section transversale choisies sur toute sa longueur, ledit moule ayant une surface en section transversale, sur toute sa longueur, qui est sensiblement identique à la surface en section transversale du cordon en un point de contact donné,
(c) mettre en contact ladite surface avec le cordon allongé dans le moule ;
(d) retirer le moule, de telle sorte que le joint reste collé à ladite surface dudit article, puis
(e) faire durcir le joint.

5. Procédé selon la revendication 4, dans lequel lesdites forme et surface en section transversale du cordon sont les mêmes sur toute sa longueur, et la surface en section transversale de la cavité de moule allongée est sensiblement la même que celle du cordon.

6. Procédé selon la revendication 4, dans lequel le cordon et la cavité de moule allongée présentent une ligne qui relie les centroïdes des sections transversales et forme une figure fermée.

7. Procédé selon l'une des revendications 4 à 6, dans lequel lesdites forme et surface en section transversale du cordon sont les mêmes sur toute sa longueur, et la surface en section transversale de la cavité de moule allongée est sensiblement la même que celle du cordon.

8. Procédé selon l'une des revendications 4 à 7, dans lequel le cordon et la cavité de moule allongée présentent une ligne qui relie les centroïdes des sections transversales et forme une figure fermée.

9. Procédé selon l'une des revendications précédentes, dans lequel le matériau pour joint est formé en combinant un premier et un second composants au moment de la formation du cordon, le premier composant étant un polymère qui peut être durci à l'humidité et le second composant étant un élastomère non réticulé qui, lorsqu'il est exposé à l'humidité, devient thermodurci.

10. Procédé selon la revendication 9, dans lequel :
(a) le premier composant est un polymère primaire ayant un squelette en polyester et des groupes terminaux isocyanate qui sont capables de réagir chimiquement les uns avec les autres en présence d'humidité pour former un polymère dérivé ayant une longueur de chaîne supérieure à la moyenne par comparaison avec ledit polymère primaire, et
(b) le second composant est un élastomère non réticulé qui n'est pas sensiblement réactif chimiquement avec lui-même ou avec ledit premier composant en présence d'humidité, lesdits premier et second composants étant intimement mélangés pour former ladite composition de matière ; ladite composition de matière étant une composition thermoplastique facilement extrudable, et moulable d'une autre manière classique, lorsqu'elle est conservée en l'absence d'humidité et d'autres matériaux donneurs d'hydrogène actif mais qui, lorsqu'elle est exposée à l'humidité, devient essentiellement thermodurcie.

11. Procédé selon l'une des revendications 8 à 10, dans lequel ledit second composant est choisi dans le groupe consistant en les copolymères séquencés styrène-isoprène-styrène, les polymères séquencés styrène-butadiène-styrène, les homopolymères de l'isoprène, et le poly(chlorure de vinyle), le polyisobutylène, les caoutchoucs styrène-éthylène, butylène-styrène et éthylène-propylène.

12. Procédé selon l'une des revendications 8 à 11, dans lequel le matériau devient un matériau élastomère essentiellement thermodurci lorsqu'il est exposé à une humidité relative de 10 à 100% pendant au moins 5 minutes, ou lorsqu'il est immergé dans de l'eau à une température de 0°C à 100°C.

13. Article comprenant un joint formé suivant le procédé selon l'une des revendications 1 à 12.
